# EUROPÄISCHE PATENTSCHRIFT

(11) **EP 1 265 953 B1**
(45) Veröffentlichungstag und Bekanntmachung des Hinweises auf die Patenterteilung: **28.01.2004**
(21) Anmeldenummer: 01913852.8
(22) Anmeldetag: 08.03.2001
(51) Int. Cl.: C08K 3/34, C08L 21/00

(54) **MIT SCHWEFEL VERNETZBARE KAUTSCHUKMISCHUNG SOWIE VERFAHREN ZU IHRER HERSTELLUNG UND DARAUS ERHÄLTLICHE VERNETZTE KAUTSCHUKMISCHUNGEN UND FORMKÖRPER**
RUBBER MIXTURE THAT CAN BE CROSS-LINKED BY SULFUR, METHOD FOR THE PRODUCTION THEREOF, AND CROSS-LINKED RUBBER MIXTURES AND SHAPED BODIES THAT CAN BE OBTAINED THEREFROM
MELANGE CAOUTCHOUTEUX RETICULABLE AVEC DU SOUFRE, PROCEDE PERMETTANT DE LE PRODUIRE, MELANGES CAOUTCHOUTEUX RETICULES ET CORPS MOULES AINSI OBTENUS

(30) Priorität: 24.03.2000 DE 10014664
(43) Veröffentlichungstag der Anmeldung: 18.12.2002
(73) Patentinhaber: SÜD-CHEMIE AG, 80333 München (DE)
(72) Erfinder: BRANDSCH, Rainer Dr., 82205 Gilching (DE); DICK, Stefan, 86706 Weichering (DE); SCHURZ, Klaus, 81477 München (DE); RENNAR, Nikolaus, 97294 Unterpleichfeld (DE); SIEDLER, Andreas, 63768 Hösbach (DE)
(74) Vertreter: Splanemann Reitzner Baronetzky Westendorp Patentanwälte
(86) Internationale Anmeldenummer: PCT/EP2001/002638
(87) Internationale Veröffentlichungsnummer: WO 2001/072884

(56) Entgegenhaltungen:
- EP-A- 0 894 819
- DE-B- 2 727 052
- US-A- 4 431 755
- US-A- 4 522 970

## Beschreibung

Die Erfindung betrifft eine mit Schwefel vernetzbare Kautschukmischung, ein Verfahren zu ihrer Herstellung sowie die daraus erhältlichen vernetzten Kautschukmischungen und Formkörper.

Moderne Lkw- und Pkw-Reifen stellen technisch ausgereifte High-Performance-Verbundkörper dar, die sich aus mehreren Einzelbauteilen mit unterschiedlichen physikalischen Eigenschaften und unterschiedlichen Mischungsrezepturen zusammensetzen. Ungeachtet dieser Komplexität hat ein moderner Luftreifen im System "Rad/Reifen-Fahrbahn" unterschiedliche, sich oft widersprechende Anforderungen zu erfüllen, von denen als wesentliche Merkmale möglichst niedriger Rollwiderstand, hoher Nassrutschwiderstand und hohe Abriebfestigkeit zu nennen sind.

Prinzipiell kann davon ausgegangen werden, dass beim Abrollen eines Reifens und beim Bremsvorgang insbesondere in der Lauffläche dynamische Deformationsprozesse angeregt werden, die mit sehr unterschiedlichen Anregungsfrequenzen ablaufen. Aufgrund des Frequenz-Temperatur-Korrespondenzprinzips lassen sich jedoch näherungsweise den für Nassgriff relevanten hochfrequenten und den für Rollwiderstand relevanten niederfrequenten Deformationsvorgängen entsprechende Temperaturbereiche des mechanischen Verlustfaktors tan zuordnen. Der Nassrutschwiderstand kann so zum Beispiel verbessert werden durch Anheben der Werte des Verlustfaktors im Temperaturbereich von - 20 bis -5°C bei einer Anregungsfrequenz von etwa 10 Hz. Andererseits sollte der Rollwiderstand verbessert werden durch eine Absenkung des Verlustfaktors im Temperaturbereich von 50 bis 65°C bei ebenfalls etwa 10 Hz.

Erschwert wird die Lösung dieses Problems jedoch dadurch, dass die genannten Reifeneigenschaften nicht nur von Materialkenngrößen abhängen, sondern auch von material-unabhängigen Parametern, wie z.B. Luftinnendruck, Reifenkonstruktion, Reifengewicht, Laufflächenprofil, Fahrbahnrauigkeit usw..

So verwundert es nicht, dass es trotz großer Anstrengungen bisher noch nicht möglich war, alle drei Reifeneigenschaften des obigen "magischen Dreiecks der Reifentechnologie" unabhängig voneinander auf ein maximal erreichbares Niveau einzustellen, da jeweils zwei der drei Haupteigenschaften reziprok miteinander gekoppelt zu sein scheinen.

Die Eigenschaften eines Vulkanisats hängen vornehmlich von der Mikro- und Makrostruktur der das Polymernetzwerk aufbauenden Netzwerkketten ab. Die Vulkanisateigenschaften werden darüber hinaus aber auch ganz entscheidend von der Struktur des Netzwerkes beeinflusst, die u.a. von der Vernetzungsart, der Vernetzungsdichte und der Art, Menge und Dispersion des zugesetzten Füllstoffes und Weichmachers abhängig ist, da technologisch interessante Eigenschaften in vielen Fällen erst durch die Zugabe von derartigen Zuschlagstoffen erzielt werden können.

Üblicherweise setzt man Kautschukmischungen hohe Mengen an Aktivrußen zur Verbesserung der Festigkeit und des Abriebwiderstandes zu. Aufgrund von Füllstoff-Füllstoff-Wechselwirkungen führt dies jedoch leider zu einer unerwünschten Energiedissipation der dynamisch beanspruchten Vulkanisate im für den Rollwiderstand relevanten Frequenzbereich und damit zu einer Erhöhung der mechanischen Dämpfung, was sich letztlich auf einen erhöhten Kraftstoffverbrauch auswirkt.

Verschiedene Ansätze zur Optimierung der Reifeneigenschaften wurden vorgeschlagen:

In der EP 0 505 904 A1 wird der Einsatz von trans-1,4-Polybutadien-Kautschuk (trans-BR) in der Base-Mischung einer Reifenlauffläche empfohlen. Der Einsatz von Styrol-Isopren-Butadien-Terpolymeren in der Reifenlauffläche nach der US 5137 998 A ist eine weitere Möglichkeit, durch die Auswahl geeigneter Kautschuke die Reifeneigenschaften zu verbessern. Ferner wurde die Kopplung von anionisch polymerisierten Dien-(Co-)-Polymeren und Endstoppung mit substituierten Iminen oder aromatischen Nitrilen in der EP 510 410 A1 und der US-A-5153 271 sowie die Zugabe von halogeniertem Butylkautschuk in der US-A-5 162 409 zu mit Kieselsäure gefüllten SBR/BR-Kautschukmischungen vorgeschlagen.

Eine nach der EP 0 501 227 A1 vorgeschlagene (partielle) Substitution des Rußes durch eine spezielle Kieselsäure in Kombination mit einem speziellen Lösungs-SBR brachte eine deutliche Reduzierung des Rollwiderstandes wie auch eine Verbesserung des Rutschwiderstandes bei akzeptabler Abriebfestigkeit. Um dieses Potential jedoch erreichen zu können, sind die Zugabe spezieller Verstärkungsadditive und die genaue Einhaltung spezieller Mischvorschriften erforderlich, was letztlich zu erhöhten Mischungskosten führt. Die Einsparung der Verstärkungsadditive führt dagegen in der Regel zu einer Reihe von Nachteilen der kieselsäurehaltigen Mischungen bzw. Vulkanisate im Vergleich zu Rußmischungen bzw. -vulkanisaten. Hier sind vor allem zu nennen :
- hohe Mischungsviskosität und hohe Spritzquellung,
- schwierige Dispersion der polaren Kieselsäuren in unpolaren Kautschuken,
- geringe Kautschuk-Füllstoff-Wechselwirkung,
- Behinderung der beschleunigten Schwefelvulkanisation und daraus resultierend verhältnismäßig niedrige Vernetzungsdichten.

Die US-A-5 328 949 beschreibt Kautschukmassen aus Elastomeren, Kieselsäure, gegebenenfalls Ruß und einem Kieselsäure-Kuppler, der aus Dithiodipropionsäure zusammengesetzt ist. Als Kieselsäure kann pyrogene Kieselsäure oder Fällungskieselsäure verwendet werden, wobei letztere bevorzugt wird. Der Kuppler hat die Aufgabe, die an sich schwache chemische Bindung zwischen den Kieselsäureteilchen und den Elastomeren zu verstärken. Die Verwendung von Dithiodipropionsäure hat aber den Nachteil, dass die Anbindung der Kieselsäureteilchen an die Elastomeren zu schwach ist.

Aus der EP 0 921 150 A1 ist eine Kautschukmischung für Laufstreifen von Fahrzeugreifen bekannt, die eine Mischung aus speziellen Kautschuken darstellt, welche mit Kieselsäure und Ruß verstärkt ist. Mit dieser Kombination soll das Nassrutschverhalten verbessert werden. Als Kieselsäuren sollen die aus dem Stand der Technik bekannten Kieselsäuren mit einer BET-Oberfläche von 145 bis 270 m²/g und einer CTAB-Oberfläche von 120 bis 285 m²/g Verwendung finden, z.B. das Handelsprodukt VN3 der Firma Degussa. Es handelt sich hierbei um eine Fällungskieselsäure. Die Nachteile dieser Kautschukmischung bestehen darin, dass ihre Verarbeitungseigenschaften unbefriedigend sind, die vulkanisierten Massen eine geringe Alterungsbeständigkeit haben und der Rollwiderstand der daraus hergestellten Reifen verhältnismäßig groß ist.

Aus der Arbeit von Peng, Shuwen; Jiang, Chunxian; Lu, Jianchun in "Huagong Keji" (1998), 6(2), 31-33 ist bekannt, dass bei Zusatz von etwa 5 bis 10% modifiziertem Bentonit zu dem inneren und dem mittleren Teil eines Reifens die mechanischen Eigenschaften des Vulkanisats nicht beeinträchtigt werden, dass aber die Verarbeitungseigenschaften der Kautschukmischung modifiziert und die Kohäsionskräfte zwischen dem Rahmen und der Kautschukmasse verbessert werden. Über die Art, die Struktur und die physikalisch-chemischen Eigenschaften des modifizierten Bentonits sowie über die Zusammensetzung der Kautschukmischung finden sich jedoch keine Angaben.

Die CN 1 013 868 B beschreibt ein durch Fluoridionen katalysiertes Verfahren zur Säureaktivierung von Sepiolith und quellfähigem Ton unter Verwendung von Schwefelsäure, Salzsäure und Salpetersäure. Das säureaktivierte Produkt kann als verstärkender Füllstoff für Kautschuk und andere Polymere verwendet werden. Der Preis des Produkts soll niedriger sein als der der in der Kautschukindustrie verwendeten Fällungskieselsäure (weißer Ruß). Über die Art des Kautschuk-Polymers und dessen Anbindung an den verstärkenden Füllstoff finden sich keine Angaben.

In der Tat liefern die Produkte nach CN 1 013 868 B im Vergleich zu Standard-Kieselsäuren ungünstigere Werte. Dies zeigt sich z. B. in einer geringeren Vernetzungsdichte der beanspruchten Silicagele, dokumentiert durch eine kleinere Drehmomentsdifferenz (Dₒₒ - Dₒ) im Vulkameter-Experiment. Auch die Reifendehnung und die Zugfestigkeit der beanspruchten Vulkanisate sind geringer im Vergleich zu mit Kieselsäure gefüllten Vulkanisaten.

Aus der GB 1,326,907 A sind Organotone bekannt, die Tetraederund Oktaederschichten aus einem Phyllosilicat enthalten, wobei mindestens ein Teil der Metallatome aus der Octaederschicht durch organische Reste mit mindestens einer ethylenischen Doppelbindung ersetzt sind und worin mindestens ein Siliciumatom über eine Si-O-Si-Siloxanbindung mit einem Siliciumatom der Tetraederschicht verbunden ist. Diese Organotone werden durch Säurehydrolyse eines Phyllosilicats hergestellt, wobei mindestens ein Teil der Metallatome aus der Oktaederschicht entfernt wird. Als Beispiele für Phyllosilicate sind Glimmer, Vermiculite, Chrysotile oder Sepiolithe genannt. Diese Phyllosilicate sind nicht quellfähig.

Die Organotone werden als verstärkende Füllstoffe in mit Schwefel vernetzbaren Kautschukmischungen (Styrol-Butadienoder Ethylen-Propylen-Kautschuk) verwendet.

In der US 4,233,366 A und in der GB 1,533,262 A ist die Herstellung von organischen Phyllosilicaten, insbesondere von Chrysotilasbest, beschrieben, wobei der Chrysotilasbest mit einer verdünnten Säure behandelt wird, um aus oberflächennahen Oktaederschichten Metalloxide, wie Magnesiumoxid, herauszulösen, worauf der so behandelte Chrysotilasbest mit einem Organosilan behandelt wird. Durch die milde Säurebehandlung soll vermieden werden, dass amorphe Kieselsäure hinterbleibt. Als Phyllosilicate werden keine quellfähigen smektitischen Schichtsilicate verwendet. Die organophilen Substanzen werden als rheologische Additive und verstärkende Füllstoffe, auch für Kautschukmischungen, verwendet. Die Beschaffenheit des Füllstoffs und dessen reifentechnischen Eigenschaften werden nicht beschrieben.

In den JP 07-149954 A, 08-085738 A und 09-322807 A sind Kautschukmischungen, enthaltend Dienpolymere, feinteilige Tone als Füllstoffe und Silan-Kuppler, beschrieben. Als Füllstoff wird in erster Linie Kaolinit verwendet. Säureaktivierte smektitische Schichtsilicate sind nicht erwähnt. Aus den US 4,810,734 A und 4,889,885 A sind Verbundstoffe aus Polymeren und darin dispergierten Schichtsilicaten bekannt, wobei Schichtsilicate mit einer Ionenumtauschfähigkeit von 50 bis 200 mVal/100 g mit einem Quellmittel behandelt werden, um die Zwischenschichtkationen gegen organische Onium-Ionen auszutauschen. Der erhaltenen Komplex hat einen definierten Schichtabstand, ist also nicht röntgenamorph; der organische Anteil beträgt 10 bis 30 Gew.-%. Die organischen Onium-Ionen sind über die positive Ladung an die negativ geladenen Schichten des Schichtsilicats gebunden und können über eine zweite Funktionalität in ein Polymer eingebaut werden. Es werden keine säureaktivierten smektitischen Schichtsilicate als Füllstoffe verwendet.

Einen ähnlichen Gegenstand betrifft die WO 94/22680, wonach ein Kautschukkomplex aus einem reaktiven Kautschuk mit einer positiv geladenen Gruppe und einem darin gleichmäßig verteilten Schichtsilicat zusammengesetzt ist, dessen Schichtabstand größer als 10 Å ist. Der reaktive Kautschuk enthält ein Oniumsalz oder einen Oniumsalz-Vorläufer. Bei dem Füllstoff handelt es sich also nicht um ein säureaktiviertes smektitisches Schichtsilicat.

Die DE 43 08 311 A, 44 15 720 A und 198 02 698 A beschreiben Kautschukmassen, die u.a. feinverteilte gefällte Kieselsäure oder silicatische Füllstoffe enthalten. Die gefällte Kieselsäure kann mit Hilfe eines Weichmachers hydrophobiert sein. Als Kuppler kann ein schwefelhaltiges Silan oder ein epoxydierter Naturkautschuk verwendet werden. Gefällte Kieselsäure oder silicatische Füllstoffe werden nicht durch Säurebehandlung eines quellfähigen Schichtsilicats hergestellt. Sie hat im allgemeinen eine kugelförmige Struktur.

Aus der US 5,396,940 ist eine mit Schwefel vulkanisierte Kautschukmasse bekannt, die epoxydierten Kautschuk, einen Füllstoff auf der Basis von Kieselsäure (pyrogene Kieselsäure oder gefällte Kieselsäure) und einen Kuppler enthält. Bei dem Kautschuk handelt es sich um Dien-Polymere oder -copolymere. Säureaktivierte Schichtsilicate sind nicht als Füllstoffe erwähnt.

Hauptaufgabe der vorliegenden Erfindung war die Entwicklung eines dämpfungsarmen Elastomersystems, das u.a. für die Herstellung von Reifenbauteilen und technischen Gummiartikeln, wie Schwingungsdämpfern, geeignet ist. Insbesondere sollte ein aus dieser Mischung hergestellter Reifen im Vergleich zu kieselsäurehaltigen bzw. rußgefüllten Systemen eine deutliche Reduzierung des Rollwiderstandes und damit auch des Benzinverbrauchs sowie damit einhergehend der CO₂-Emission aufweisen. Gleichzeitig sollte sich aber auch eine Verbesserung des Nassrutschwiderstandes bei akzeptablen Festigkeitswerten ergeben. Nur geringe Änderungen der Vulkanisateigenschaften mit fortschreitender Sauerstoffalterung bei erhöhten Temperaturen und ein gleichmäßigerer Gummiabrieb waren weitere, von der vorliegenden Erfindung zu erfüllende Forderungen. Ferner sollte die erfindungsgemäße Mischung geringe Spritzquellung, geringe Gaspermeabilität, gute Covulkanisierbarkeit mit anderen Dien-Kautschuken, keine Reversion und keinen "marching modulus" aufweisen und somit auch in dickwandigen Bauteilen einsetzbar sein. Weiterhin war eine kostengünstigere Fertigung der Gummiartikel aufgrund des Einsatzes preisgünstigerer Rohmaterialien und/oder des reduzierten Mischungsaufwandes gegenüber konventionellen Lösungen anzustreben.

Es wurde nun überraschenderweise gefunden, dass die Verwendung von feinteiligen säureaktivierten smektitischen Schichtsilicaten in Verbindung mit bestimmten kautschukartigen Polymeren und Kupplern zu einer Verbreiterung der mechanischen Dämpfungskurve im hochfrequenten und zu einer Absenkung der Absolutwerte des Verlustfaktors im niederfrequenten Deformationsbereich führt.

Gegenstand der Erfindung ist somit eine mit Schwefel vernetzbare Kautschukmischung, enthaltend:
a) mindestens ein Dien-Polymer oder -Copolymer;
b) mindestens ein feinteiliges, von einem smektitischen Schichtsilicat abgeleitetes säureaktiviertes Schichtsilicat als verstärkenden Füllstoff;
c) mindestens einen Kuppler mit gegenüber dem Füllstoff (b) reaktiven Gruppen;
sowie eine mit Schwefel vernetzte Kautschukmischung, die aus der vernetzbaren Kautschukmischung durch Vulkanisation bei Temperaturen von mehr als etwa 100°C erhältlich ist.

Vorzugsweise enthält das Silan (c2) als reaktive Gruppe mindestens eine funktionelle Gruppe -Sx-, wobei x eine ganze Zahl von 2 bis 6 ist. Beispiele für derartige Silane sind bis-(Trialkoxysilylalkyl)polysulfane oder deren Kondensations-. Produkte mit sich selbst oder mit weiteren schwefelhaltigen oder nicht-schwefelhaltigen Silanen. Stellvertretend für diese schwefelhaltigen Organosilane seien 3,3'-bis-(Triethoxysilylpropyl)tetrasulfan oder dessen Kondensationsprodukte mit sich selbst oder mit 3-Mercaptopropyltrimethoxysilan oder Propyltriethoxysilan genannt.

Die vernetzte Kautschukmischung zeigt einerseits sowohl eine Verbreiterung als auch eine Erhöhung der Absolutwerte der mechanischen Dämpfungskurve im hochfrequenten Deformationsbereich und andererseits eine Absenkung der absoluten Werte des Verlustfaktors im niederfrequenten Deformationsbereich. Daraus resultiert eine Verbesserung sowohl des Nassrutschwiderstandes als auch des Rollwiderstandes bei akzeptablen Festigkeitswerten, da die Füllstoffteilchen hauptvalenzmäßig an die Kautschukmatrix angebunden sind. Dies zeigt sich zum Beispiel dadurch, dass bereits beim Erwärmen der Kautschuk-Grundmischung (ohne Vernetzungschemikalien) eine exotherme Reaktion auftritt und nach einer Lösungsmittelbehandlung der unvulkanisierten Mischung der Anteil des an den Füllstoff gebundenen Kautschuks (bound rubber) höher ist. Ausführliche kautschuktechnologische Prüfungen zeigten, dass die erfindungsgemäße Kautschukmischung und die daraus hergestellten Vulkanisate in der Tat kieselsäurehaltigen und rußgefüllten Elastomersystemen des Standes der Technik überlegen sind.

Vorzugsweise enthält das Dien-Polymer oder -Copolymer (a) keine Epoxy-Gruppen, und der Kuppler (c) stellt wenigstens ein Dien-Polymer oder -Copolymer mit funktionellen Epoxy-Gruppen (c1) und/oder ein Silan (c2) mit mindestens einer weiteren, mit dem Dien-Polymer oder -Copolymer (a) reaktiven Gruppe dar.

Das Gewichtsverhältnis zwischen dem Kuppler (c1) und dem Kuppler (c2) beträgt vorzugsweise etwa 1 bis 5 : 1, insbesondere etwa 3 : 1.

Vorzugsweise stellt das Dien-Polymer (a1) einen Kautschuk, und das Dien-Copolymer (a2) ein Copolymer aus einem konjugierten Dien und einer aromatischen Vinylverbindung und/oder einem monoolef inischen aliphatischen Monomer dar.

Die erfindungsgemäße Kautschukmischung enthält etwa 5 bis 150 Gewichtsteile verstärkenden Füllstoff auf 100 Gewichtsteile Gesamt-Dien-Polymer oder -Copolymer (a + c1).

Das feinteilige säureaktivierte Schichtsilicat ist von einem smektitischen Schichtsilicat abgeleitet. Das feinteilige säureaktivierte smektitische Schichtsilicat hat vorzugsweise eine spezifische BET-Oberfläche von etwa 80 bis 250 m²/g, insbesondere von etwa 80 bis 230 m²/g, eine CTAB-Oberfläche von etwa 80 bis 220 m²/g, einen mittleren Teilchendurchmesser von etwa 0,4 bis 10 µm, ein Porenvolumen von etwa 0,1 bis 2 ml/g und einen SiO₂-Gehalt von etwa 60 bis 98 %, insbesondere von etwa 80 bis 98 % ; seine Schichtstruktur (plättchenförmige Morphologie) ist noch weitgehend erhalten.

Vorzugsweise ist das säureaktivierte smektitische Schichtsilicat unter Verwendung eines Säuregemischs, enthaltend Fluoridionen, erhältlich.

Die Verwendung von Fluoridionen in katalytisch wirksamen Mengen bewirkt eine Erhöhung des Porenvolumens und der CTAB-Oberfläche. Die kleinen Poren werden also größer, was insofern von Vorteil ist, als die großen Kautschukmoleküle leichter in die Poren eindringen können, wodurch eine bessere Bindung zwischen dem Füllstoff und dem Polymer entsteht. Die Fluoridionen reagieren mit den 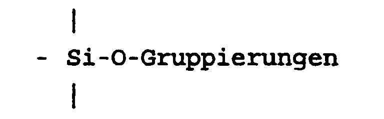 im Schichtsilicat, wobei H₂SiF₆ gebildet wird, die wiederum zu HF und (SiO₂)_{aq} hydrolysiert. Die gebildete HF reagiert dann wieder mit den 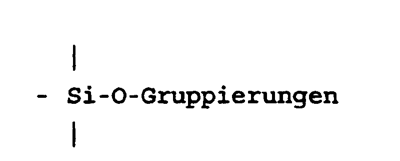 im Schichtsilicat, so dass die Fluoridionen gewissermaßen katalytisch wirken. Es genügt z.B., wenn die Menge der Fluoridionen im Säuregemisch nur etwa 1 bis 5 % beträgt. Durch den Zusatz der Fluoridionen wird auch die Aufschlusszeit verkürzt.

Als Ausgangsmaterialen für die Säureaktivierung können folgende smektitische Schichtsilicate verwendet werden: Montmorillonit (Hauptmineral des Bentonits), Beidellit, Hectorit, Saponit, Nontronit und deren Gemische. Diese smektitischen Schichtsilicate haben eine glimmerartige Dreischichtstruktur mit zwei Tetraederschichten und einer dazwischenliegenden Oktaederschicht. Zwischen den negativ geladenen Silicatschichten liegen die austauschfähigen Zwischenschichtkationen (Lithium, Natrium, Kalium, Magnesium und/oder Calcium). Charakteristisch für die meisten Minerale dieser Gruppe sind Kationenaustauschvermögen und Fähigkeit zur innerkristallinen Quellung.

Bei der Säureaktivierung werden die Schichtsilicate vorzugsweise mit Mineralsäuren (z.B. Salzsäure oder Schwefelsäure mit einem kleinen Anteil an Flusssäure) behandelt. Dabei werden zunächst die austauschfähigen Zwischenschichtkationen durch Protonen ersetzt. Danach werden, je nach den Reaktionsbedingungen (Säurekonzentration, Temperatur, Druck und Zeit) die Oktaederschichtionen (Magnesium, Aluminium, Eisen) teilweise oder ganz herausgelöst, so dass schließlich aus dem Schichtsilicat röntgenamorphe Produkte, überwiegend amorphe Kieselsäure entstehen. Bei nicht zu starkem Säureangriff bleiben die Silicatschichten zum Teil erhalten. Durch die in den Randzonen gebildete voluminöse Kieselsäure werden die Schichtpakete und auch einzelne Silicatschichten gegeneinander verschoben und desorientiert. Mit zunehmender Säurekonzentration steigen spezifische Oberfläche, Mikroporenvolumen und die aus dem Gitter herausgelöste Menge Al₂O₃ und Fe₂O₃ an. Zugleich nimmt der Gehalt an freier, in verdünnter Sodalösung löslicher Kieselsäure zu. Im Elektronenmikroskop fällt die starke Porosität der Randzonen der säureaktivierten smektitischen Schichtsilicate auf.

Auch wenn bei einem starken Säureangriff röntgenamorphe Kieselsäure entsteht, so hat diese eine andere Struktur als Fällungskieselsäure, d. h. die Schichtstruktur und die damit verbundene plättchenförmige Morphologie ist noch weitgehend erhalten.

Durch die Säureaktivierung erhöht sich die spezifische BET-Oberfläche auf etwa 80 bis 250 m²/g, insbesondere auf bis zu etwa 230 m²/g. Die BET-Oberfläche wird nach der Stickstoff-Adsorptionsmethode nach DIN 66131 bestimmt. Bei einer starken Säureaktivierung nimmt die BET-Oberfläche wieder etwas ab, fällt aber im allgemeinen nicht unter 150 m²/g. Die CTAB-Oberfläche nimmt ebenfalls auf etwa 80 bis 220 m²/g zu. Diese wird nach ISO 6810 bestimmt. Außerdem nimmt das spezifische Porenvolumen auf etwa 0,1 bis 2 ml/g zu . Das spezifische Porenvolumen wird durch Adsorption von Stickstoff bestimmt. Hierbei wird der Füllstoff im Hochvakuum auf die Temperatur des flüssigen Stickstoffs gekühlt und kontinuierlich Stickstoff zudosiert. Die adsorbierte Gasmenge als Funktion des Druckes bei konstanter Temperatur liefert die Adsorptionsisotherme. Nach erfolgtem Druckausgleich wird der Stickstoff schrittweise desorbiert, und man erhält die Desorptionsisothermen. Die Bestimmung des spezifischen Porenvolumens erfolgt durch Auswertung der Adsorptions- bzw. Desorptionsisothermen mit Hilfe der "density function theory" (DFT).

Wenn bei der Säureaktivierung Magnesium-, Aluminium- und Eisen-Ionen aus dem Gitter herausgelöst werden, erhöht sich in entsprechender Weise der SiO₂-Gehalt. Vorzugsweise hat das erfindungsgemäß verwendete säureaktivierte smektitische Schichtsilicat einen SiO₂-Gehalt von etwa 60 bis 98%, insbesondere von etwa 80 bis 98%.Der SiO₂-Gehalt wird gemäß DIN 55921 bestimmt. Der mittlere Teilchendurchmesser des säureaktivierten smektitischen Schichtsilicats beträgt etwa 0,4 bis 10µm.

Die Bestimmung der Partikelgrößenverteilung der Füllstoffe wurde mit Hilfe eines Laser-Partikelgrößenanalysators durchgeführt. Dazu wurde eine Probe von etwa 50 mg in einem 20-ml-Becherglas mit etwa 10 ml Ethanol versetzt und 5 Minuten mittels Ultraschallfinger behandelt. Die Ethanol-Suspension wird in die Dispergiereinheit des Geräts überführt und so lange Ethanol zugegeben, bis die korrekte Konzentration am Meßgerät eingestellt ist, und anschließend vermessen.

Der Unterschied zwischen dem säureaktivierten smektitischen Schichtsilicat und Fällungskieselsäure ist auch bei einem hohen SiO₂-Gehalt signifikant. Unter dem Rasterelektronenmikroskop zeigen die erfindungsgemäßen säureaktivierten Schichtsilicate auch bei einem hohen SiO₂-Gehalt eine plättchenförmige Morphologie, in der die Morphologie des Ausgangsmaterials konserviert ist. Dagegen zeigt die Fällungskieselsäure unter dem Rasterelektronenmikroskop traubenförmige Aggregate aus sphärischen Primärpartikeln. Die Agglomerate/Aggregate neigen beim Einarbeiten des Füllstoffs in die Kautschukmasse zu einer partiellen Desintegration in kleinere Struktureinheiten, was zu einer starken Erhöhung der Viskosität und damit zu einer Verschlechterung der Verarbeitungseigenschaften führt.

Bezüglich der Zusammensetzung und der Eigenschaften von säureaktivierten smektitischen Schichtsilicaten wird auf "Ullmanns Encyklopädie der Technischen Chemie", 4. Auflage (1983), Band 23, Seiten 311 bis 326 verwiesen.

Nach einer bevorzugten Ausführungsform der Erfindung liegt das feinteilige säureaktivierte Schichtsilicat (b) oder ein Teil davon als Masterbatch-Mischung mit dem Kuppler (c1) vor, wobei etwa 50 bis 150 Gewichtsteile säureaktiviertes Schichtsilicat auf 100 Gewichtsteile Kuppler entfallen.

Die erfindungsgemäße Kautschukmischung kann neben dem feinteiligen säureaktivierten Schichtsilicat (b) auch feinteilige gefällte Kieselsäure enthalten, wobei der Gewichtsanteil des feinteiligen säureaktivierten Schichtsilicats etwa 20 bis 100%, vorzugsweise etwa 40 bis 100%, bezogen auf den gesamten verstärkenden Füllstoff, beträgt.

Es wurde überraschenderweise gefunden, dass die erfindungsgemäßen Vorteile auch dann auftreten, wenn der Anteil des säureaktivierten Schichtsilicats (b) gegenüber dem Anteil der Fällungskieselsäure verhältnismäßig gering ist, da der zuerst genannte Füllstoff aufgrund seiner plättchenförmigen Morphologie offenbar mit dem Dien-Polymeren oder -Copolymeren in eine stärkere Wechselwirkung tritt als der zuletzt genannte Füllstoff. Statt der Fällungskieselsäure können auch andere amorphe Kieselsäuren, z.B. pyrogene Kieselsäure oder Kieselsäure-Xerogele, verwendet werden.

Die Dien-Polymeren oder -Copolymeren (a) sind vorzugsweise aus Naturkautschuk, synthetischem Polyisopren, Polybutadien, Isopren-Butadien-Copolymeren, Ethylen-Propylen-Dien-Terpolymeren (EPDM), Copolymeren aus aromatischen Vinylverbindungen und konjugierten Dienen sowie aus Copolymeren aus monoolefinischen Monomeren und konjugierten Dienen ausgewählt.

Das Dien-Polymer oder -Copolymer (c1) weist vorzugsweise einen Epoxydierungsgrad von etwa 10 bis 60 Mol-% und eine Glastemperatur (T_{g}) von -60 bis -10°C auf; sein Anteil beträgt in der Mischung etwa 5 bis 50 Gewichtsteile, bezogen auf 100 Gewichtsteile Gesamt-Polymer oder -Copolymer (a + c1).

Das aus aromatischer Vinylverbindung und konjugiertem Dien, vorzugsweise durch Lösungspolymerisation, hergestellte Copolymer (a2) hat vorzugsweise einen Anteil an aromatischer Vinylverbindung von etwa 5 bis 40 Gew.-%, bezogen auf das Copolymer; die Glastemperaturen des aus aromatischer Vinylverbindung und konjugiertem Dien sowie des aus monoolefinischem aliphatischen Monomer und konjugiertem Dien aufgebauten Copolymers variieren vorzugsweise zwischen T_{g} = -70 und -10°C.

Vorzugsweise ist die aromatische Vinylverbindung aus Styrol, α-Methylstyrol, p-Methylstyrol, o-Methylstyrol, Vinylnaphthalin oder Gemischen davon; das monoolefinische, aliphatische Monomer aus Acrylnitril, Methacrylnitril oder Gemischen davon und das konjugierte Dien aus Butadien-(1,3), 2-Methylbutadien-(1,3) 2,3-Dimethylbutadien-(1,3), 2-Chlorbutadien-(1,3), Pentadien-(1,3) oder Gemischen davon ausgewählt.

Gegenstand der Erfindung ist weiterhin ein Verfahren zur Herstellung der vorstehend beschriebenen vernetzbaren Kautschukmischung, welches folgende Schritte umfasst:
(i) Mischen des Dien-Polymers oder -Copolymers (a) und des verstärkenden Füllstoffs (b) mit dem Kuppler (c) und/oder gegebenenfalls mit einer Masterbatch-Mischung des Füllstoffs (b) mit dem Kupper (c1) sowie gegebenenfalls mit weiteren, üblichen Zuschlagstoffen mit Ausnahme der Vulkanisationschemikalien unter Verwendung üblicher Mischaggregate bei etwa 105 bis 150 °C;
(ii) Zumischen der Vulkanisationschemikalien bei einer Temperatur von weniger als etwa 100°C.

Es werden die üblichen Vulkanisationschemikalien, wie Schwefel oder Schwefelspender (Verbindungen, die eine Kette von Schwefelatomen enthalten, welche durch endständige organische Gruppen abgesättigt ist), verwendet.

Die verwendeten Mischaggregate dienen hierbei nicht nur zur Dispergierung der Mischungsbestandteile, sondern wirken in gewissem Sinn auch als chemische Reaktoren.

Es können beispielsweise folgende Mischaggregate verwendet werden: Innenmischer mit tangierenden oder ineinandergreifenden Kneterschaufeln; Innenmischer ohne oder mit gegeneinander verstellbarem Knetschaufelsystem; Walzwerke aus zwei in der Regel horizontal nebeneinander gelagerten Walzen mit verstellbarem Walzenspalt, regelbarer Umlaufgeschwindigkeit und einstellbarer Temperierung.

Gegenstand der Erfindung ist ferner eine mit Schwefel vernetzte Kautschukmischung, erhältlich aus der mit Schwefel vernetzbaren Kautschukmischung durch Vulkanisation bei Temperaturen von mehr als etwa 100°C, insbesondere von etwa 160 bis 180°C.

Schließlich sind Gegenstand der Erfindung Formkörper, insbesondere Fahrzeugreifen oder Teile davon, Gummilager, Förderbänder, Schläuche und Dichtungselemente, die aus der vernetzbaren bzw. vernetzten Kautschukmischung erhältlich sind.

Die Erfindung ist durch die nachstehenden Beispiele erläutert, ohne jedoch darauf beschränkt zu sein.

### Beispiel 1

### Herstellung der erfindungsgemäßen Füllstoffe A, B, C und D:

A) 50 kg Bentonit-Rohton (35 kg atro) wurden mit 66 kg Wasser aufgeschlämmt, über ein 1 mm-Sieb filtriert und mit einem Zyklon gereinigt. Die resultierende Suspension wurde mit 5,55 kg technischer HCl (29%) und 0,45 kg Wasser 16 h unter Rühren gekocht. Nach dem Abkühlen auf 70°C wurde an einer Filterpresse filtriert und mit entionisiertem Wasser gewaschen, bis die elektrische Leitfähigkeit des Filtrats auf die des Waschwassers abgesunken war. Das Filtergut wurde anschließend über Nacht bei 170°C getrocknet, vermahlen und gesichtet.
B) 50 kg Bentonit-Rohton (35 kg atro) wurden mit 66 kg Wasser aufgeschlämmt, über ein 1 mm-Sieb gefiltert und mit einem Zyklon gereinigt. Die resultierende Suspension wurde mit 71,2 kg technischer HCl (31%) 72 h unter Rühren gekocht. Nach dem Abkühlen auf 70°C wurde an einer Filterpresse filtriert und mit entionisiertem Wasser gewaschen, bis die elektrische Leitfähigkeit des Filtrats auf die des Waschwassers abgesunken war. Das Filtergut wurde anschließend über Nacht bei 170°C getrocknet, vermahlen und gesichtet.
C) 50 kg Bentonit-Rohton (35 kg atro) wurden mit 66 kg Wasser aufgeschlämmt, über ein 1 mm-Sieb filtriert und mit einem Zyklon gereinigt. Die Suspension wurde mit 57,0 kg technischer HCl (31%) und 1,38 kg HF (48%) 16 h unter Rühren gekocht. Nach dem Abkühlen auf 70°C wurde an einer Filterpresse filtriert und mit entionisiertem Wasser gewaschen, bis die elektrische Leitfähigkeit des Filtrats auf die des Waschwassers abgesunken war. Das Filtergut wurde anschließend über Nacht bei 170°C getrocknet, vermahlen und gesichtet.
D) 50 kg Bentonit-Rohton (35kg atro) wurden mit 66 kg Wasser aufgeschlämmt, über ein 1 mm-Sieb gefiltert und mit einem Zyklon gereinigt. Die Suspension wurde mit 57,0 kg technischer HCl (31%) und 0,3 gh HF (48%) 72 h unter Rühren gekocht. Nach dem Abkühlen auf 70°C wurde an einer Filterpresse filtriert und mit entionisiertem Wasser gewaschen,bis die elektrische Leitfähigkeit des Filtrats auf die des Waschwassers abgesunken war. Das Filtergut wurde anschließend über Nacht bei 170°C getrocknet, vermahlen und gesichtet.

Als Vergleichssubstanz wurde eine handelsübliche Fällungskieselsäure (Ultrasil ® VN3; Hersteller Degussa) verwendet. Die chemischen und physikalischen Eigenschaften der erfindungsgemäßen Füllstoffe A, B, C und D sowie der Fällungskieselsäure sind in Tabelle I angegeben.

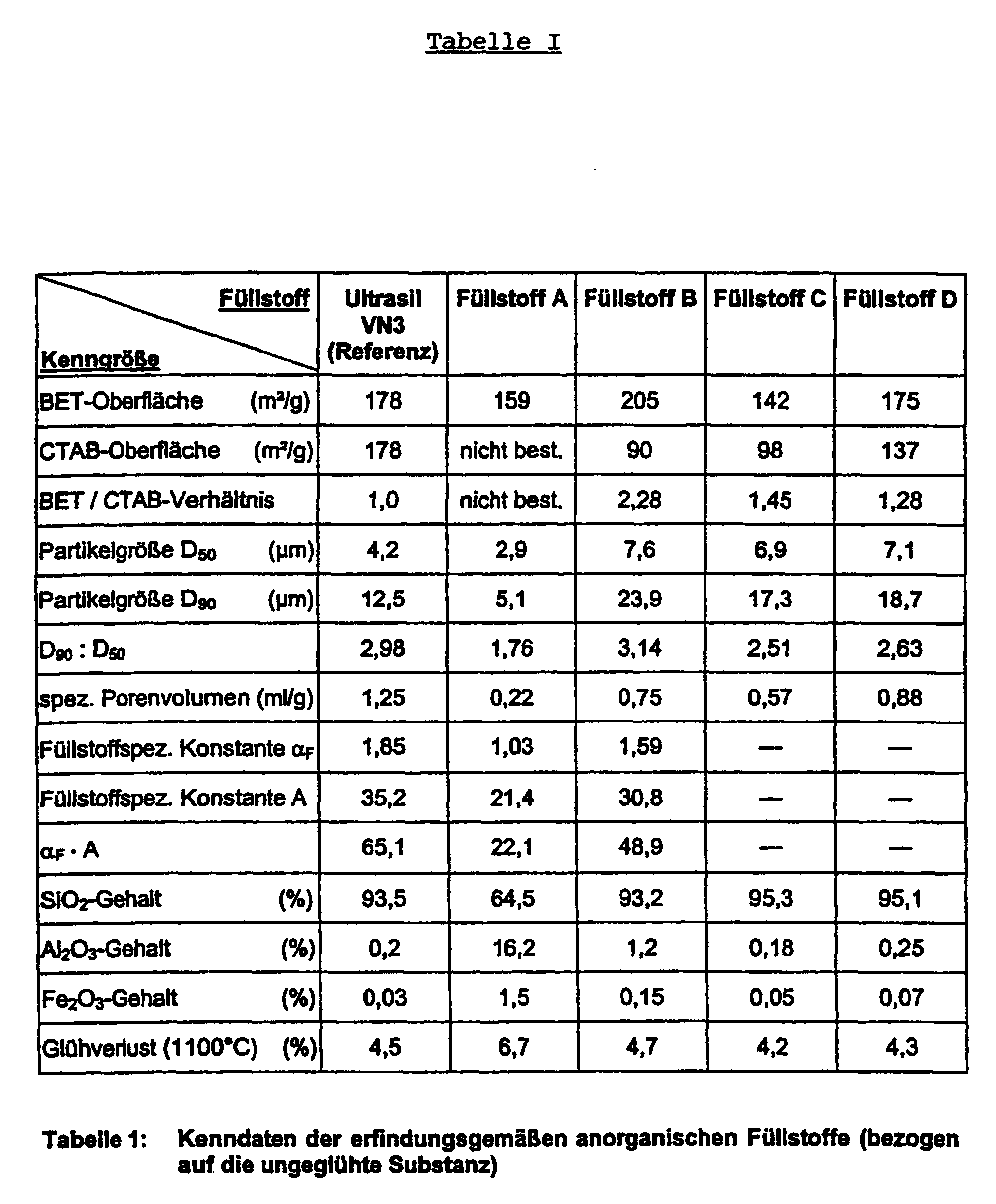

Die füllspezifische Konstante α_{F} und die füllstoffspezifische Konstante A beziehen sich auf einen Naturkautschuk (NR)/Styrol-Butadien-Kautschuk (SBR)-Compound (15/85) und sind aus Vulkameter- bzw. Rückprallelastizitäts-Messungen zugänglich. Die Vulkametermessungen wurden gemäß DIN 53529 und die Rückprallelastizitäts-Messungen gemäß DIN 53512 durchgeführt.

### Beispiele 2 und 3

Die in Beispiel 1 angegebenen Füllstoffe wurden in verschiedene Kautschukmischungen (M1, M2, M3) eingearbeitet, deren Zusammensetzung in den nachstehenden Tabellen II a und II b angegeben ist.

**Tabelle IIa**

| **Tabelle 2a :** **Erfindungsgemäße Mischungsrezepturen (Konzentrationsangaben in phr)** | | | | | | | |
|---|---|---|---|---|---|---|---|
| **Rezepturbestandteil** | **Mischung M1** | | | **Mischung M2** | | | |
| | **M1-1** | **M1-2** | **M1-3** | **M2-1** | **M2-2** | **M2-3** | **M2-4** |
| ENR-50 | 10 | 10 | 10 | 15 | 15 | 15 | 15 |
| VSL 2525-0 | 80 | 60 | 60 | 60 | 60 | 60 | 60 |
| VSL 5025-1 | 41,25 | 41,25 | 41,25 | 34,4 | 34,4 | 34,4 | 34,4 |
| Ruß N 339 | --- | --- | --- | --- | --- | --- | 70 |
| Ultrasil VN 3 | 68 | --- | 34 | 70 | --- | --- | --- |
| Füllstoff B | --- | 68 | 34 | --- | 70 | --- | --- |
| Füllstoff C | --- | --- | --- | --- | --- | 70 | --- |
| X50-S | 10,2 | 10,2 | 10,2 | 9,5 | 9,5 | 9,5 | --- |
| Σ arom. Öl | 18 | 18 | 18 | 21,9 | 21,9 | 21,9 | 34,4 |
| 6PPD | 1,5 | 1,5 | 1,5 | 1,5 | 1,5 | 1,5 | 1.5 |
| TMQ | 0,5 | 0,5 | 0,5 | 0,5 | 0,5 | 0,5 | 0,5 |
| Lichtschutzwachs | 1,5 | 1,5 | 1,5 | 1,5 | 1,5 | 1,5 | 1,5 |
| ZnO | 3,0 | 3,0 | 3,0 | 3,0 | 3,0 | 3,0 | 3,0 |
| Stearinsäure | 2,0 | 2,0 | 2,0 | 2,0 | 2,0 | 2,0 | 2,0 |
| Schwefel | 1,8 | 1,8 | 1,8 | 1,8 | 1,8 | 1,8 | 1,8 |
| CBS | 1,5 | 1,5 | 1,5 | 1,5 | 1,5 | 1,5 | 1,5 |
| DPG | 2,0 | 2,0 | 2,0 | 2,0 | 2,0 | 2,0 | 0,3 |

**Tabelle II b**

| **Tabelle 2b: Erfindungsgemäße Mischungsrezepturen (Konzentrationsangaben in phr)** | | | | | |
|---|---|---|---|---|---|
| **Rezepturbestandteil** | **Mischung M3** | | | | |
| | **M3-1** | **M3-2** | **M3-3** | **M3-4** | **M3-5** |
| **NR** | 15 | 15 | 15 | 15 | 15 |
| **VSL 2525-0** | 58,8 | 58,8 | 58,8 | 58,8 | 58,8 |
| **VSL 5025-1** | 36 | 36 | 36 | 36 | 36 |
| **Ultrasil VN 3** | 65 | --- | --- | --- | --- |
| **Füllstoff** A | --- | 65 | --- | --- | --- |
| **Füllstoff B** | --- | --- | 65 | --- | --- |
| **Füllstoff C** | --- | --- | --- | 65 | --- |
| **Füllstoff D** | --- | --- | --- | --- | 65 |
| **X50-S** | 10,2 | 10,2 | 10,2 | 10,2 | 10,2 |
| **Σ aromatisches Öl** | 27,5 | 27,5 | 27,5 | 27,5 | 27,5 |
| **6PPD** | 1,5 | 1,5 | 1,5 | 1,5 | 1,5 |
| **TMQ** | 0,5 | 0,5 | 0,5 | 0,5 | 0,5 |
| **Lichtschutzwachs** | 1,5 | 1,5 | 1,5 | 1,5 | 1,5 |
| **ZnO** | 3,0 | 3,0 | 3,0 | 3,0 | 3,0 |
| **Stearinsäure** | 2,0 | 2,0 | 2,0 | 2,0 | 2,0 |
| **Schwefel** | 1,8 | 1,8 | 1,8 | 1,8 | 1,8 |
| **CBS** | 1,5 | 1,5 | 1,5 | 1,5 | 1,5 |
| **DPG** | 2,0 | 2,0 | 2,0 | 2,0 | 2,0 |

Anmerkungen zu den Tabellen II a und II b: Es wurden folgende Rohmaterialien zur Herstellung der Kautschukmischungen eingesetzt:
- Epoxyprene 50 (epoxydierter Naturkautschuk ENR-50) : Handelsprodukt der Firma Guthrie Sdn., Bhd.
- Buna VSL 2525-0 (ölfreier S-SBR), BUNA VSL-5025-1 (Ölverstreckter S-SBR): Handelsprodukte der Firma Bayer AG;
- Corax N 339 (Ruß N 339): Handelsprodukt der Firma Degussa AG;
- Ultrasil VN3 (gefällte Kieselsäure) : Handelsprodukt der Firma Degussa AG;
- X50-S bis(Triethoxysilylpropyl)tetrasulfan; Handelsprodukt Si69 der Firma Degussa-Hüls AG in einer 1:1-Mischung mit gefällter Kieselsäure Ultrasil VN 3, gemischt im Verhältnis 1:1 mit Corax N 330); Verstärkungsadditiv der Firma Degussa-Hüls AG.
- 6PPD:N-(1,3-Dimethylbutyl)-N'-phenyl-p-phenylendiamin
- TMO: 2,2,4-Trimethyl-1,2-dihydrochinolin, polymerisiert
- ZnO: Zinkoxid
- CBS: N-Cyclohexyl-2-benzothiazolyl-sulfenamid
- DPG: N,N'-Diphenylguanidin

Die Herstellung der Grundmischung erfolgte durch Vermischen der Kautschukmaterialien, der Füllstoffkomponenten und der weiteren Zuschlagstoffe mit Ausnahme des Vulkanisationssystems unter Verwendung üblicher Mischaggregate bei gleichzeitiger Erwärmung der Kautschukmischung auf eine Temperatur zwischen 105 und 160°C. Die Herstellung der Fertigmischungen erfolgte durch Zumischung der Vulkanisationschemikalien (Vernetzungschemikalien), wie Schwefel bzw. Schwefel spender , Beschleuniger, gegebenenfalls Verzögerer bei einer Temperatur von etwas unterhalb 100°C.

Anschließend wurden die Fertigmischungen zu unterschiedlich dicken Platten (1 - 10 mm) gepresst und bei einer Temperatur vom 160°C ausvulkanisiert. Aus den Vulkanisatplatten wurden dann Prüfkörper ausgestanzt, die auf folgende Eigenschaften getestet wurden:

Shore-Härte gemäß DIN 53505; Rückprall-Elastizität gemäß DIN 53512; Bestimmung der Zugfestigkeit und Reißdehnung gemäß DIN 53504; mechanischer Verlustfaktor tan bei verschiedenen Temperaturen gemäß DIN 53513 und DIN 53535 mit Hilfe eines dynamisch-mechanischen Analysators (Eplexor); Gasdurchlässigkeit bei verschiedenen Temperaturen gemäß DIN 53536. In den angegebenen Prüfvorschriften sind die Abmessungen der Prüfkörper, ihre Konditionierung sowie das jeweilige Prüf-Procedere im Detail beschrieben.

Die Ergebnisse sind in den Tabellen III a und III b angegeben.

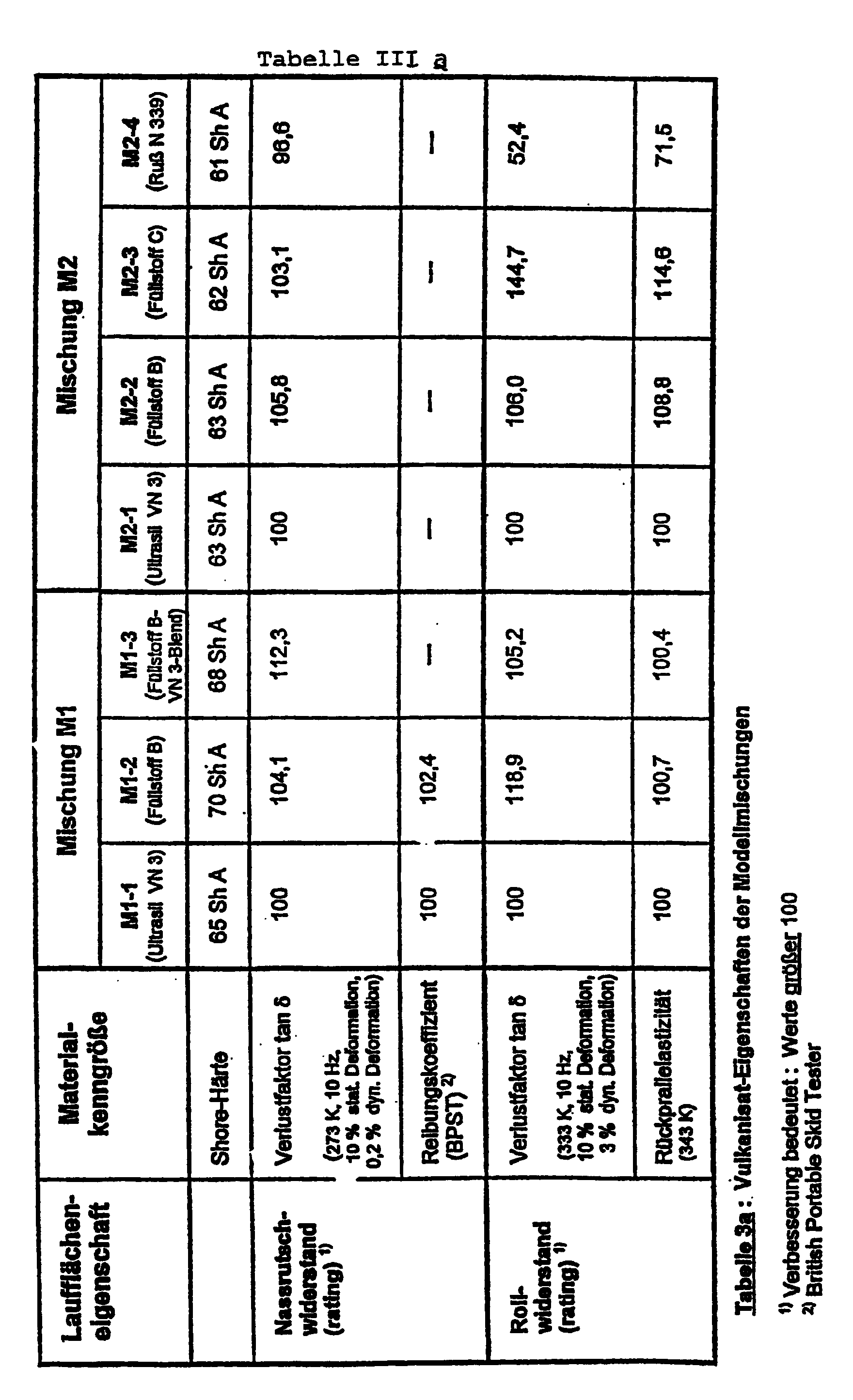

**Tabelle III b**

| **Tabelle 3b: Vulkanisat- bzw. Mischungsdaten der Modellmischungen** | | | | | |
|---|---|---|---|---|---|
| **Materialkenngröße** | **Mischung M3** | | | | |
| | **M3-1** | **M3-2** | **M3-3** | **M3-4** | **M3-5** |
| **Shore-Härte (Sh A)** | 52,2 | 43,0 | 50,3 | 52,5 | 53,9 |
| **σ**_{**100**} **(Mpa)** | 1,85 | 1,17 | 3,17 | 3,25 | 3,5 |
| **Rückprallelastizität (343 K) (%)** | 60,5 | 55,7 | 61,1 | 63,4 | 65,2 |
| **tÖl/mÖl (s/g)** | 1,13 | 0,36 | 0,34 | 0,32 | 0,31 |

Vergleichende Angaben zu den Füllstoffen A bis D und Ultrasil VN3 finden sich in Tabelle II b und Tabelle III b.

Die günstigeren Verarbeitungseigenschaften der erfindungsgemäßen Kautschukmischung im Vergleich zu Compounds mit herkömmlichen Kieselsäuren zeigen sich z.B. in der zeitlichen Änderung der Strangaufweitung bei der Extrusion einer Kautschukmischung durch eine Düse mit einem Durchmesser von 1 mm. Die erfindungsgemäße Mischung mit einem erfindungsgemäßen Füllstoff zeigt deutlich kleinere Absolutwerte der Strangaufweitung und eine geringere zeitliche Abhängigkeit, insbesondere bei hohen Schergefällen, wie sie beim Extrudieren und Kalandrieren von Produktionsmischungen auftreten.

Aus der Tabelle III a ergibt sich folgendes:

Sowohl in der Mischung M1 als auch in der Mischung M2 weisen die mit den erfindungsgemäßen Füllstoffen gefüllten Vulkanisate deutliche Vorteile im Nassrutschwiderstand und im Rollwiderstand auf im Vergleich zu Vulkanisaten gemäß dem derzeitigen Stand der Technik, die mit einer handelsüblichen Fällungskieselsäure gefüllt wurden.

Ein mit Ruß gefülltes Vulkanisat (M2-4) zeigt demgegenüber in beiden Reifeneigenschaften deutliche Einbußen.

## Patentansprüche

1. Mit Schwefel vernetzbare Kautschukmischung, enthaltend:
a) mindestens ein Dien-Polymer oder -Copolymer;
b) mindestens ein feinteiliges, von einem smektitischen Schichtsilicat abgeleitetes säureaktiviertes Schichtsilicat als verstärkenden Füllstoff;
c) mindestens einen Kuppler mit gegenüber dem Füllstoff (b) reaktiven Gruppen.

2. Kautschukmischung nach Anspruch 1, **dadurch gekennzeichnet, dass** das Dien-Polymer oder -Copolymer (a) keine Epoxy-Gruppen enthält und dass der Kuppler (c) wenigstens ein Dien-Polymer oder - Copolymer mit funktionellen Epoxy-Gruppen (c1) und/oder ein Silan (c2) mit mindestens einer weiteren, mit dem Dien-Polymer oder -Copolymer (a) reaktiven Gruppe darstellt.

3. Kautschukmischung nach Anspruch 1 oder 2, **dadurch gekennzeichnet, dass** das Silan (c2) als reaktive Gruppe mindestens eine funktionelle Gruppe -Sₓ- enthält, wobei x eine ganze Zahl von 2 bis 6 ist.

4. Kautschukmischung nach Anspruch 2 oder 3, **dadurch gekennzeichnet, dass** das Gewichtsverhältnis zwischen dem Kuppler (c1) und dem Kuppler (c2) etwa 1 bis 5 : 1, vorzugsweise etwa 3 : 1, beträgt.

5. Kautschukmischung nach einem der Ansprüch 1 bis 4, **dadurch gekennzeichnet, dass** das Dien-Polymer (a1) einen Kautschuk und das Dien-Copolymer (a2) ein Copolymer aus einem konjugierten Dien und einer aromatischen Vinylverbindung und/oder einem monoolef inischen aliphatischen Monomer darstellt.

6. Kautschukmischung nach einem der Ansprüche 1 bis 5, **dadurch gekennzeichnet, dass** sie zusätzlich zu dem feinteiligen säureaktivierten Schichtsilicat (b) eine feinteilige gefällte Kieselsäure und/oder feinteiligen Ruß als verstärkenden Füllstoff sowie gegebenenfalls weitere übliche Zuschlagstoffe enthält.

7. Kautschukmischung nach einem der Ansprüche 1 bis 6, **dadurch gekennzeichnet, dass** sie etwa 5 bis 150 Gewichtsteile verstärkenden Füllstoff auf 100 Gewichtsteile Gesamt-Dien-Polymer oder -Copolymer (a + c1) enthält.

8. Kautschukmischung nach einem der Ansprüche 1 bis 7, **dadurch gekennzeichnet, dass** das säureaktivierte smektitische Schichtsilicat eine spezifische BET-Oberfläche von etwa 80 bis 250 m²/g, vorzugsweise von etwa 80 bis 230 m²/g, eine CTAB-Oberfläche von etwa 80 bis 220 m²/g, einen mittleren Teilchendurchmesser von etwa 0,4 bis 10 µm, ein Porenvolumen von etwa 0,1 bis 2 ml/g und einen SiO₂-Gehalt von etwa 60 bis 98%, vorzugsweise von etwa 80 bis 98%, aufweist und dass seine Schichtstruktur (plättchenförmige Morphologie) noch weitgehend erhalten ist.

9. Kautschukmischung nach Anspruch 8, **dadurch gekennzeichnet, dass** das säureaktivierte smektitische Schichtsilicat unter Verwendung eines Säuregemischs, enthaltend Fluoridionen, erhalten worden ist.

10. Kautschukmischung nach einem der Ansprüche 1 bis 9, **dadurch gekennzeichnet, dass** das feinteilige säureaktivierte Schichtsilicat (b) oder ein Teil davon als Masterbatch-Mischung mit dem Kuppler (c1) vorliegt, wobei etwa 50 bis 150 Gewichtsteile säureaktiviertes Schichtsilicat auf 100 Gewichtsteile Kuppler entfallen.

11. Kautschukmischung nach Anspruch 5, **dadurch gekennzeichnet, dass** der Gewichtsanteil des feinteiligen säureaktivierten Schichtsilicats etwa 20 bis 100 %, bezogen auf den gesamten verstärkenden Füllstoff, beträgt.

12. Kautschukmischung nach einem der Ansprüche 1 bis 11, **dadurch gekennzeichnet, dass** das Dien-Polymer oder -Copolymer (a) aus Naturkautschuk, synthetischem Polyisopren, Polybutadien, Isopren-Butadien-Copolymeren und Ethylen-Propylen-Dien-Terpolymeren (EPDM) ausgewählt ist.

13. Kautschukmischung nach Anspruch 2, **dadurch gekennzeichnet, dass** das Dien-Polymer oder -Copolymer (c1) einen Epoxydierungsgrad von etwa 10 bis 60 Mol-% und eine Glastemperatur (T_{g}) von - 60 bis -10°C aufweist, und dass sein Anteil in der Mischung etwa 5 bis 50 Gewichtsteile, bezogen auf 100 Gewichtsteile Gesamt-Polymer oder -Copolymer (a + c1) beträgt.

14. Kautschukmischung nach Anspruch 5, dadurch gekennzeichet, dass das aus aromatischer Vinylverbindung und konjugiertem Dien, vorzugsweise durch Lösungspolymerisation, hergestellte Copolymer (a2) einen Anteil an aromatischer Vinylverbindung von etwa 5 bis 40 Gew.-%, bezogen auf das Copolymer, aufweist und dass die Glastemperaturen des aus aromatischer Vinylverbindung und konjugiertem Dien sowie des aus monoolefinischem aliphatischem Monomer und konjugiertem Dien aufgebauten Copolymers zwischen T_{g} = -70 und -10°C variieren.

15. Kautschukmischung nach Anspruch 5, **dadurch gekennzeichnet, dass** die aromatische Vinylverbindung aus Styrol, α-Methylastyrol, p-Methylstyrol, o-Methylstyrol, Vinylnaphthalin oder Gemischen davon; das monoolefinische, aliphatische Monomer aus Acrylnitril, Methacrylnitril oder Gemischen davon und das konjugierte Dien aus Butadien-(1,3), 2-Methylbutadien-(1,3) 2,3-Dimethylbutadien-(1,3), 2-Chlorbutadien-(1,3), Pentadien-(1,3) oder Gemischen davon ausgewählt ist.

16. Verfahren zur Herstellung der Kautschukmischung nach einem der Ansprüche 1 bis 13, welches folgende Schritte umfasst:
(i) Mischen des Dien-Polymers oder -Copolymers (a) und des verstärkenden Füllstoffs (b) mit dem Kuppler (c) und/oder gegebenenfalls mit einer Masterbatch-Mischung gemäß Anspruch 10 sowie gegebenenfalls mit weiteren, üblichen Zuschlagstoffen, mit Ausnahme der Vulkanisationschemikalien unter Verwendung üblicher Mischaggregate bei etwa 105 bis 150°C;
(ii) Zumischen der Vulkanisationschemikalien bei einer Temperatur von weniger als etwa 100°C.

17. Mit Schwefel vernetzte Kautschukmischung, erhältlich aus der mit Schwefel vernetzbaren Kautschukmischung nach einem der Ansprüche 1 bis 15 durch Vulkanisation bei Temperaturen von mehr als etwa 100°C.

18. Formkörper, insbesondere Fahrzeugreifen oder Teile davon, Gummilager, Förderbänder, Schläuche und Dichtungselemente, erhältlich aus der Kautschukmischung nach einem der Ansprüche 1 bis 15 bzw. 17.

## Claims

1. A rubber mixture which can be cross-linked with sulphur, containing:
a) at least one diene polymer or copolymer;
b) at least one fine particle acid-activated layered silicate derived from a smectitic layered silicate as reinforcing filler;
c) at least one coupler with groups which are reactive with respect to the filler (b).

2. A rubber mixture according to Claim 1, **characterised in that** the diene polymer or copolymer (a) contains no epoxy groups, and **in that** the coupler (c) represents at least one diene polymer or copolymer with functional epoxy groups (c1) and/or a silane (c2) with at least one further group which is reactive with the diene polymer or copolymer (a).

3. A rubber mixture according to Claim 1 or 2, **characterised in that** the silane (c2) contains as a reactive group at least one functional group -Sₓ-, x being a whole number of 2 to 6.

4. A rubber mixture according to Claim 2 or 3, **characterised in that** the weight ratio between the coupler (c1) and the coupler (c2) is approximately 1 to 5 : 1, preferably approximately 3 : 1.

5. A rubber mixture according to any one of Claims 1 to 4, **characterised in that** the diene polymer (a1) represents a rubber and the diene polymer (a2) a copolymer consisting of a conjugated diene and an aromatic vinyl compound and/or a monoolefinic aliphatic monomer.

6. A rubber mixture according to any one of Claims 1 to 5, **characterised in that**, in addition to the fine particle acid-activated layered silicate (b), it contains fine particle precipitated silicic acid and/or fine particle carbon black as reinforcing filler, as well as optionally other conventional loading materials.

7. A rubber mixture according to any one of Claims 1 to 6, **characterised in that** it contains approximately 5 to 150 parts by weight of reinforcing filler to 100 parts by weight of total diene polymer or copolymer (a + c1).

8. A rubber mixture according to any one of Claims 1 to 7, **characterised in that** the acid-activated smectitic layered silicate has a specific BET surface area of approximately 80 to 250 m²/g, preferably of approximately 80 to 230 m²/g, a CTAB surface of approximately 80 to 220 m²/g, an average particle diameter of approximately 0.4 to 10 µm, a pore volume of approximately 0.1 to 2 ml/g and an SiO₂ content of approximately 60 to 98 %, preferably of approximately 80 to 98 %, and **in that** its layered structure (laminar morphology) is substantially maintained.

9. A rubber mixture according to Claim 8, **characterised in that** the acid-activated smectitic layered silicate has been obtained using an acid mixture containing fluoride ions.

10. A rubber mixture according to any one of Claims 1 to 9, **characterised in that** the fine particle acid-activated layered silicate (b) or a portion thereof is present as a master batch mixture with the coupler (c1), wherein approximately 50 to 150 parts of acid-activated layered silicate by weight are allotted to 100 parts by weight of coupler.

11. A rubber mixture according to Claim 5, **characterised in that** the weight proportion of the fine particle acid-activated layered silicate is approximately 20 to 100 %, in relation to the total reinforcing filler.

12. A rubber mixture according to any one of Claims 1 to 11, **characterised in that** the diene polymer or copolymer (a) is selected from natural rubber, synthetic polyisoprene, polybutadiene, isoprene-butadiene copolymers and ethylene-propylene-diene-terpolymers (EPDM).

13. A rubber mixture according to Claim 2, **characterised in that** the diene polymer or copolymer (c1) has an epoxidisation degree of approximately 10 to 60 mol % and a glass temperature (T_{g}) of -60 to -10°C, and **in that** its proportion in the mixture amounts to approximately 5 to 50 parts by weight, in relation to 100 parts by weight of the total polymer or copolymer (a + c1).

14. A rubber mixture according to Claim 5, **characterised in that** the copolymer (a2) produced from aromatic vinyl compound and conjugated diene, preferably by solvent polymerisation, has a proportion of aromatic vinyl compound of approximately 5 to 40 % by weight in relation to the copolymer, and **in that** the glass temperatures of the copolymer synthesized from aromatic vinyl compound and conjugated diene as well as of the copolymer synthesized from monoolefinic aliphatic monomer and conjugated diene vary between T_{g} = -70 and -10°C.

15. A rubber mixture according to Claim 5, **characterised in that** the aromatic vinyl compound is selected from styrene, α-methylstyrene, p-methylstyrene, o-methylstyrene, vinyl naphthalene or mixtures thereof; the monoolefinic aliphatic monomer is selected from acrylnitrile, methacrylnitrile or mixtures thereof and the conjugated diene is selected from butadiene-(1,3), 2-methyl butadiene-(1,3) 2,3-dimethyl butadiene-(1,3), 2-chlorobutadiene-(1,3), pentadiene-(1,3) or mixtures thereof.

16. A method of producing the rubber mixture according to any one of Claims 1 to 13, which comprises the following steps:
(i) mixing the diene polymer or copolymer (a) and the reinforcing filler (b) with the coupler (c) and/or optionally with a master batch mixture according to Claim 10, and also optionally with further conventional loading materials, with the exception of the vulcanisation chemicals using conventional mixing aggregates at approximately 105 to 150°C;
(ii) admixing the vulcanisation chemicals at a temperature lower than approximately 100°C.

17. A rubber mixture cross-linked with sulphur, which can be obtained from the rubber mixture which can be cross-linked with sulphur according to any one of Claims 1 to 15 by vulcanisation at temperatures higher than approximately 100°C.

18. Moulded articles, in particular vehicle tyres or parts thereof, rubber mountings, conveyor belts, hoses and sealing elements, which can be obtained from the rubber mixture according to any one of Claims 1 to 15 and 17.

## Revendications

1. Mélange de caoutchouc vulcanisable au soufre, contenant :
a) au moins un polymère ou un copolymère d'un diène ;
b) au moins un phyllosilicate activé par un acide, finement divisé et dérivant d'un phyllosilicate smectitique, servant de charge de renfort ;
c) au moins un agent de couplage, comportant des groupes réactifs vis-à-vis de la charge (b).

2. Mélange de caoutchouc selon la revendication 1, **caractérisé en ce que** le polymère ou le copolymère d'un diène (a) ne contient pas de groupes époxy, et que l'agent de couplage (c) représente au moins un polymère ou un copolymère d'un diène ayant des groupes époxy fonctionnels (c1), et/ou un silane (c2), comportant au moins un autre groupe, réactif vis-à-vis du polymère ou du copolymère d'un diène (a).

3. Mélange de caoutchouc selon la revendication 1 ou 2, **caractérisé en ce que** le silane (c2), en tant que groupe réactif, contient au moins un groupe fonctionnel -Sₓ-, x étant un nombre entier de 2 à 6.

4. Mélange de caoutchouc selon la revendication 2 ou 3, **caractérisé en ce que** le rapport en poids de l'agent de couplage (c1) à l'agent de couplage (c2) est d'environ 1 à 5:1, de préférence d'environ 3:1.

5. Mélange de caoutchouc selon l'une des revendications 1 à 4, **caractérisé en ce que** le polymère d'un diène (a1) est un caoutchouc, et le copolymère d'un diène (a2) est un copolymère d'un diène conjugué et d'un composé vinylaromatique et/ou d'un monomère aliphatique monooléfinique.

6. Mélange de caoutchouc selon l'une des revendications 1 à 5, **caractérisé en ce qu'**il contient, en plus du phyllosilicate (b) finement divisé et activé par un acide, une silice précipitée finement divisée et/ou du noir de carbone finement divisé, servant de charge de renfort, et éventuellement aussi d'autres adjuvants usuels.

7. Mélange de caoutchouc selon l'une des revendications 1 à 6, **caractérisé en ce qu'**il contient d'environ 5 à 150 parties en poids de charge de renfort, pour 100 parties en poids de la totalité de polymère ou de copolymère d'un diène (a + c1).

8. Mélange de caoutchouc selon l'une des revendications 1 à 7, **caractérisé en ce que** le phyllosilicate smectitique activé par un acide a une aire spécifique BET d'environ 80 à 250 m²/g, de préférence d'environ 80 à 230 m²/g, une aire CTAB d'environ 80 à 220 m²/g, une granulométrie moyenne d'environ 0,4 à 10 µm, un volume des pores d'environ 0,1 à 2 ml/g et une teneur en SiO₂ d'environ 60 à 98 %, de préférence d'environ 80 à 98 %, et que sa structure en feuillets (morphologie lamellaire) est conservé en presque totalité.

9. Mélange de caoutchouc selon la revendication 8, **caractérisé en ce que** le phyllosilicate smectitique activé par un acide a été obtenu par utilisation d'un mélange d'acides contenant des ions fluorure.

10. Mélange de caoutchouc selon l'une des revendications 1 à 9, **caractérisé en ce que** le phyllosilicate (b) finement divisé et activé par un acide, ou une partie de ce dernier, se présente sous forme d'un mélange maître avec l'agent de couplage (c1), contenant environ 50 à 150 parties en poids de phyllosilicate activé par un acide pour 100 parties en poids d'agent de couplage.

11. Mélange de caoutchouc selon la revendication 5, **caractérisé en ce que** la proportion pondérale du phyllosilicate finement divisé et activé par un acide est d'environ 20 à 100 % par rapport à la totalité de la charge de renfort.

12. Mélange de caoutchouc selon l'une des revendications 1 à 11, **caractérisé en ce que** le polymère ou le copolymère d'un diène (a) est choisi parmi le caoutchouc naturel, le polyisoprène synthétique, le polybutadiène, les copolymères isoprène-butadiène et les terpolymères éthylène-propylène-diène (EPDM).

13. Mélange de caoutchouc selon la revendication 2, **caractérisé en ce que** le polymère ou le copolymère d'un diène (c1) présente un degré d'époxydation d'environ 10 à 60 % en moles et une température de transition vitreuse (T_{g}) de -60 à -10°C, et que sa proportion dans le mélange est d'environ 5 à 50 parties en poids pour 100 parties en poids de la totalité de polymère ou de copolymère (a + c1).

14. Mélange de caoutchouc selon la revendication 5, **caractérisé en ce que** le copolymère (a2), préparé à partir d'un composé vinylaromatique et d'un diène conjugué, de préférence par polymérisation en solution, a une teneur en composé vinylaromatique d'environ 5 à 40 % en poids par rapport au copolymère, et **en ce que** la température de transition vitreuse du copolymère d'un composé vinylaromatique et d'un diène conjugué, ainsi que celle du copolymère d'un monomère aliphatique monooléfinique et d'un diène conjugué, varient entre T_{g} = -70 et -10°C.

15. Mélange de caoutchouc selon la revendication 5, **caractérisé en ce que** le composé vinylaromatique est choisi parmi le styrène, l'α-méthylstyrène, le p-méthylstyrène, l'o-méthylstyrène, le vinylnaphtalène ou les mélanges de ceux-ci ; le monomère aliphatique monooléfinique est choisi parmi l'acrylonitrile, le méthacrylonitrile ou les mélanges de ceux-ci, et le diène conjugué est choisi parmi le butadiène-(1,3), le 2-méthylbuadiène-(1,3), le 2,3-diméthylbutadiène-(1,3), le 2-chloro-butadiène-(1,3), le pentadiène-(1,3) ou les mélanges de ceux-ci.

16. Procédé de fabrication du mélange de caoutchouc selon l'une des revendications 1 à 13, qui comprend les étapes suivantes :
(i) mélange du polymère ou du copolymère d'un diène (a) et de la charge de renfort (b) avec l'agent de couplage (c) et/ou éventuellement avec un mélange maître selon la revendication 10, et éventuellement avec d'autres adjuvants usuels, à l'exception des agents chimiques de vulcanisation, au moyen d'équipements mélangeurs usuels à une température d'environ 105 à 150°C ;
(ii) addition des agents chimiques de vulcanisation à une température inférieure à environ 100°C.

17. Mélange de caoutchouc réticulée au soufre, pouvant être obtenu à partir du mélange de caoutchouc réticulable au soufre selon l'une des revendications 1 à 5, par vulcanisation à des températures supérieures à environ 100°C.

18. Article moulé, en particulier pneumatique pour véhicule ou parties de ces derniers, paliers en caoutchouc, bandes transporteuses, tuyaux flexibles et éléments d'étanchéité, pouvant être obtenus à partir du mélange de caoutchouc selon l'une des revendications 1 à 15 ou 17.
